# EUROPÄISCHE PATENTSCHRIFT

(11) **EP 3 041 199 B1**
(45) Veröffentlichungstag und Bekanntmachung des Hinweises auf die Patenterteilung: **24.07.2019**
(21) Anmeldenummer: 14200562.8
(22) Anmeldetag: 30.12.2014
(51) Int. Cl.: H04L 29/12, G05B 19/418

(54) **VERFAHREN ZUR ERMITTLUNG VON KOMMUNIKATIONSGERÄTEADRESSEN INNERHALB EINES KOMMUNIKATIONSNETZES EINES INDUSTRIELLEN AUTOMATISIERUNGSSYSTEMS UND KOMMUNIKATIONSGERÄT**
METHOD FOR DETERMINING COMMUNICATION DEVICE ADDRESSES WITHIN A COMMUNICATION NETWORK OF AN INDUSTRIAL AUTOMATION SYSTEM AND COMMUNICATION DEVICE
PROCÉDÉ DE DÉTERMINATION D'ADRESSES DE DISPOSITIF DE COMMUNICATION DANS UN RÉSEAU DE COMMUNICATION D'UN SYSTÈME D'AUTOMATISATION INDUSTRIEL ET APPAREIL DE COMMUNICATION

(43) Veröffentlichungstag der Anmeldung: 06.07.2016
(73) Patentinhaber: Siemens Aktiengesellschaft, 80333 München (DE)
(72) Erfinder: Albrecht, Harald, 90475 Nürnberg (DE)

(56) Entgegenhaltungen:
- US-A1- 2005 044 355
- US-A1- 2006 112 176
- Anonymous: "DNS Infrastructure", , 13. November 2007 (2007-11-13), XP055193103, Gefunden im Internet: URL:https://technet.microsoft.com/en-us/li brary/cc732575(d=printer,v=ws.10).aspx [gefunden am 2015-06-02]

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

Aus EP1656628B1 ist ein Verfahren zum Invalidieren eines Betriebsmitteldatensatzes in einem Cache bekannt, bei dem der Betriebsmitteldatensatz zunächst durch einen Client abgerufen und hierzu zumindest eine Abfrage des Betriebsmitteldatensatzes gestartet wird. Falls die Abfrage nicht innerhalb eines vorbestimmten Zeitraums beantwortet, wird der Betriebsmitteldatensatz ungültig gemacht. Außerdem wird in diesem Fall ein übergeordneter Datensatz des Betriebsmitteldatensatzes durch den Client abgerufen und hierzu eine Abfrage des übergeordneten Datensatzes gestartet. Von einer Antwort auf diese Abfrage umfasste Informationen werden zum Aktualisieren des Betriebsmitteldatensatzes verwendet. Die Antwort auf die Abfrage des Betriebsmitteldatensatzes kann beispielsweise per Multicast übermittelt werden, so dass auch andere Clients anhand der Antwort ihre Betriebsmitteldatensätze aktualisieren können.

In EP 2 975 477 A1 ist ein Verfahren zur Registrierung von Gerätenamen aus einem industriellen Automatisierungssystem bei einem Kommunikationsnetz-Namensdienst beschrieben. Mittels einer Regelbasis wird geräteindividuell festgelegt, für welche Kommunikationsgeräte des industriellen Automatisierungssystems eine Registrierung ihres jeweiligen Gerätenamens beim Kommunikationsnetz-Namensdienst zulässig bzw. erforderlich ist. Mittels geräteseitiger dezentraler Namensdienst-Agenten werden Kommunikationsnetzadressen von Kommunikationsgeräten an einen zentralen Namensdienst-Agenten des industriellen Automatisierungssystems gemeldet. Bei einer zu registrierenden Name-Adress-Zuordnung übermittelt der zentrale Namensdienst-Agent eine die Name-Adress-Zuordnung umfassende Registrierungsanforderung an den Kommunikationsnetz-Namensdienst. Innerhalb des industriellen Automatisierungssystems kann nur der zentrale Namensdienst-Agent Registrierungsanforderungen zur Verarbeitung an den Kommunikationsnetz-Namensdienst übermitteln.

EP 2 996 004 A1 betrifft ein Verfahren zur Bereitstellung von Informationen über Kommunikationsnetzadressen innerhalb eines industriellen Automatisierungssystems. Kommunikationsgeräte verbreiten mittels einer jeweiligen Namensdienstkomponente Informationen über Zuordnungen zwischen Gerätenamen und Kommunikationsnetzadressen entsprechend einem Namensauflösungsprotokoll. Teilnetze miteinander koppelnde Router umfassen jeweils eine korrespondierende Namensdienstkomponente, durch die Informationen über sämtliche Zuordnungen von Kommunikationsnetzadressen zu Kommunikationsgeräten untergeordneter Teilnetze aggregiert werden. Diagnoseserverkomponenten der Router räumen autorisierten Diagnosesystemen teilnetzübergreifend Zugriff auf Informationen über Zuordnungen von Gerätenamen und Kommunikationsnetzadressen ein.

Aus EP 2 996 311 A1 ist ein Verfahren zur Bereitstellung von Informationen über Kommunikationsgerätenamen innerhalb eines industriellen Automatisierungssystems bekannt. Bei einer Zuweisung bzw. Änderung eines Gerätenamens eines Kommunikationsgeräts wird ein Datagramm mit einer Aktualisierungsanforderung zur Zuordnung seiner Kommunikationsnetzadresse zum geänderten oder zugewiesenen Gerätenamen insbesondere an ausgewählte Kommunikationsgeräte verbreitet. Die ausgewählten Kommunikationsgeräte erzeugen oder ändern auf die Aktualisierungsanforderung jeweils einen dem Kommunikationsgerät mit dem geänderten oder zugewiesenen Gerätenamen zugeordneten Datensatz in ihrer jeweiligen Datenbank. Dabei umfasst der Datensatz die Zuordnung der Kommunikationsnetzadresse zum Gerätenamen.

In US 2006/112176 A1 ist ein Verfahren zur Auflösung von DNS-Namen in IP-Adressen beschrieben, bei dem ausgewählten Kommunikationsgeräten jeweils eine Cache-Speicher zugeordnet ist, in dem DNS-Informationen, die durch einen DNS-Namensdienst bereitgestellt werden, zwischengespeichert werden. Ein Verbindungsaufbau von einem ersten ausgewählten Kommunikationsgerät zu einem zweiten Kommunikationsgerät wird zunächst anhand der DNS-Informationen gestartet, die im Cache-Speicher des ersten Kommunikationsgeräts gespeichert sind. Bei einem fehlgeschlagenen Verbindungsaufbauversuch wird eine Aktualisierung von im Cache-Speicher gespeicherten DNS-Informationen ausgelöst.

US 2005/0044355 A1 betrifft ein Verfahren zur Validierung von DNS-Informationen in einem Cache-Speicher, bei dem DNS-Informationen aus dem Cache-Speicher abgerufen werden und für die abgerufenen DNS-Informationen DNS-Anfragen gestartet werden. Bei einem Ausbleiben von Antworten auf DNS-Anfragen innerhalb eines vorgegebenen Zeitraums werden die jeweiligen DNS-Informationen als ungültig markiert.

Der vorliegenden Erfindung liegt die Aufgabe zugrunde, ein Verfahren zur Ermittlung von Kommunikationsgeräteadressen innerhalb eines Kommunikationsnetzes zu schaffen, das sowohl eine logische als auch eine zeitliche Konsistenz von im Rahmen von Namensauflösungsanfragen ermittelten Kommunikationsgeräteadressen gewährleistet.

Diese Aufgabe wird erfindungsgemäß durch ein Verfahren mit den in Anspruch 1 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Ermittlung von Kommunikationsgeräteadressen innerhalb eines Kommunikationsnetzes eines industriellen Automatisierungssystems stellt zumindest eine Rechnereinheit eines Kommunikationsnetz-Namensdienstes Namensdienst-Informationen über Zuordnungen zwischen Kommunikationsgerätenamen und Kommunikationsnetzadressen entsprechend einem Namensauflösungsprotokoll bereit. Vorzugsweise wird der Kommunikationsnetz-Namensdienst durch ein Internetprotokoll-basiertes Domain Name System bereitgestellt. Ausgewählten Kommunikationsgeräten des industriellen Automatisierungssystems ist jeweils eine Speichereinheit zugeordnet, in der jeweils zumindest ein Teil der Namensdienst-Informationen temporär gespeichert wird, die durch den Kommunikationsnetz-Namensdienst bereitgestellt werden. Die ausgewählten Kommunikationsgeräte rufen für Namensauflösungen zuerst die in den ihnen zugeordneten Speichereinheiten temporär gespeicherten Namensdienst-Informationen ab. Eine Aktualisierung der temporär in den zu den ausgewählten Kommunikationsgeräten zugeordneten Speichereinheiten gespeicherten Namensdienst-Informationen kann beispielsweise durch den Kommunikationsnetz-Namensdienst gesteuert werden.

Erfindungsgemäß wird ein Verbindungsaufbau von einem ersten ausgewählten Kommunikationsgerät zu einem zweiten Kommunikationsgerät bei einer auf zumindest das erste und zweite Kommunikationsgerät verteilten Anwendung bzw. Funktion des industriellen Automatisierungssystems anhand der Namensdienst-Informationen gestartet, die in der zum ersten Kommunikationsgerät zugeordneten Speichereinheit gespeichert sind. Bei einem fehlgeschlagenen Verbindungsaufbauversuch löst die Anwendung bzw. Funktion eine zumindest teilweise Aktualisierung der in der zum ersten Kommunikationsgerät zugeordneten Speichereinheit gespeicherten Namensdienst-Informationen aus. Außerdem übermittelt ein Ersatz-Kommunikationsgerät bei einem Austausch eines Kommunikationsgeräts durch das Ersatz-Kommunikationsgerät eine Registrierungsanforderung an die Rechnereinheit des Kommunikationsnetz-Namensdienstes. Darüber hinaus löst die Anwendung bzw. Funktion bei erneuten fehlgeschlagenen Verbindungsaufbauversuchen die zumindest teilweise Aktualisierung der in der zum ersten Kommunikationsgerät zugeordneten Speichereinheit gespeicherten Namensdienst-Informationen in mit jedem fehlgeschlagenen Verbindungsaufbauversuch zunehmenden Zeitabständen aus. Dies ermöglicht, dauerhafte hohe Lasten an Servern eines Domain Name System durch Aktualisierungsanfragen zu vermeiden.

Entsprechend einer vorteilhaften Ausgestaltung des erfindungsgemäßen Verfahrens übermitteln Kommunikationsgeräten des industriellen Automatisierungssystems zugeordnete Namensdienst-Agenten bei einer für das jeweilige Kommunikationsgerät zu registrierenden Name-Adress-Zuordnung eine die Name-Adress-Zuordnung umfassende Registrierungsanforderung an die Rechnereinheit des Kommunikationsnetz-Namensdienstes. Dabei kann das Ersatz-Kommunikationsgerät ein Automatisierungsgerät umfassen oder in ein Automatisierungsgerät integriert sein. Vorzugsweise sind die Namensdienst-Agenten und die den ausgewählten Kommunikationsgeräten zugeordneten Speichereinheiten zur temporären Speicherung von Namensdienst-Informationen jeweils in einen DNS-Client eines ein Internetprotokoll-basierten Domain Name System integriert. Dabei bilden die Speichereinheiten einen Cache des jeweiligen DNS-Client.

Die Namensdienst-Informationen in den Speichereinheiten, die den ausgewählten Kommunikationsgeräten zugeordnet sind, werden entsprechend einer bevorzugten Ausgestaltung der vorliegenden Erfindung für eine durch den Kommunikationsnetz-Namensdienst vorgegebene Lebensdauer gespeichert und danach automatisch gelöscht. Die Namensdienst-Informationen in den Speichereinheiten, die den ausgewählten Kommunikationsgeräten zugeordnet sind, umfassen vorteilhafterweise Abfrageergebnisse von an den Kommunikationsnetz-Namensdienst gerichteten Namensauflösungsanfragen. Dabei kann beispielsweise ein Teil der Namensauflösungsanfragen durch die ausgewählten Kommunikationsgeräte entsprechend einem regelmäßigen Abfrageschema für vorgebbare Kommunikationsgerätenamen an den Kommunikationsnetz-Namensdienst gerichtet werden.

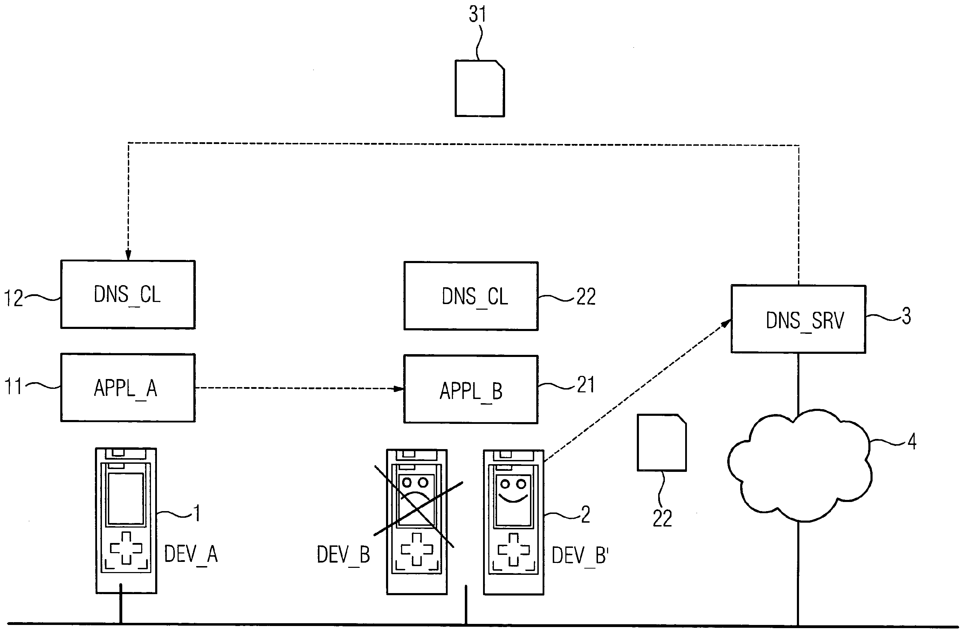

Die vorliegende Erfindung wird nahfolgend an einem Ausführungsbeispiel anhand der Zeichnung näher beschrieben. Es zeigt die
- Figur: ein Kommunikationssystem mit einem Server eines Domain Name System und zwei Kommunikationsgeräten, auf eine Anwendung bzw. Funktion eines industriellen Automatisierungssystems verteilt ist.

Das in der Figur dargestellte Kommunikationssystem umfasst ein öffentliches Internetprotokoll-basiertes Kommunikationsnetz 4 mit einem Server 3 eines Domain Name System, durch das ein globaler Kommunikationsnetz-Namensdienst bereitgestellt wird, und mehrere Kommunikationsgeräte 1, 2, die beispielsweise einem industriellen Automatisierungssystem zugeordnet sind. Die Kommunikationsgeräte 1, 2 können ein Automatisierungsgerät, wie eine speicherprogrammierbare Steuerung oder ein dezentrales Peripheriegerät, umfassen oder in ein Automatisierungsgerät integriert sein. Der DNS-Server 3 stellt Namensdienst-Informationen 31 über Zuordnungen zwischen Kommunikationsgerätenamen und Kommunikationsnetzadressen entsprechend einem Namensauflösungsprotokoll bereit. Die Namensdienst-Informationen 31 werden beispielsweise als Antwort auf Adressauflösungsanfragen der Kommunikationsgeräte 1, 2 übermittelt.

Die Kommunikationsgeräte 1, 2 weisen jeweils zumindest einen Anschluss für eine Verbindung mit innerhalb des industriellen Automatisierungssystems miteinander verbundenen Kommunikations- bzw. Automatisierungsgeräten sowie eine Sende- und Empfangseinheit auf. Außerdem umfassen die Kommunikationsgeräte 1, 2 jeweils einen mit dem DNS-Server 3 gekoppelten DNS-Client 12, 22, der beispielsweise für eine Übermittlung von Registrierungsanforderungen 22 an den DNS-Server 3 vorgesehen ist. Eine Registrierungsanforderung umfasst dabei eine für das jeweilige Kommunikationsgerät 1, 2 zu registrierende Name-Adress-Zuordnung. Darüber hinaus umfassen die DNS-Clients 12, 22 jeweils eine Cache-Speichereinheit zur temporären Speicherung von abgerufenen Namensdienst-Informationen 31.

Die Namensdienst-Informationen 31 werden in den Cache-Speichereinheiten der DNS-Clients 12, 22 für eine durch den Kommunikationsnetz-Namensdienst vorgegebene "Time to Live" Lebensdauer gespeichert und danach automatisch gelöscht. Des weiteren gehen die Namensdienst-Informationen in den Cache-Speichereinheiten u.a. aus Abfrageergebnissen von an den DNS-Server 3 gerichteten Namensauflösungsanfragen hervor. Die Namensauflösungsanfragen können dabei entsprechend einem regelmäßigen Abfrageschema für vorgebbare Kommunikationsgerätenamen an den DNS-Server 3 gerichtet werden, so dass hierdurch die Namensdienst-Informationen in den Cache-Speichereinheiten fortlaufend aktualisiert werden. Zusätzlich kann eine Aktualisierung der temporär in den Cache-Speichereinheiten der DNS-Clients 12, 22 gespeicherten Namensdienst-Informationen durch den Kommunikationsnetz-Namensdienst gesteuert werden.

Die Kommunikationsgeräte 1, 2 sind dafür ausgestaltet und eingerichtet, dass für Namensauflösungen zuerst die in der zugeordneten Cache-Speichereinheit temporär gespeicherten Namensdienst-Informationen abgerufen werden. Erst bei einem fehlgeschlagenen Abruf bzw. nicht lokal vorhandenen Namensdienst-Informationen wird eine Adressauflösungsanfrage an den DNS-Server 3 gestartet.

Im vorliegenden Ausführungsbeispiel ist auf die beiden Kommunikationsgeräte 1, 2 eine Anwendung des industriellen Automatisierungssystems verteilt, durch die eine Automatisierungsfunktion oder ein Dienst bereitgestellt wird. Dabei umfasst diese Anwendung jeweils eine auf jedem der beiden Kommunikationsgeräte 1, 2 ablaufende Teil-Anwendung 11, 21. Ein Verbindungsaufbau im Rahmen dieser verteilten Anwendung von einem ersten Kommunikationsgerät 1 zu einem zweiten Kommunikationsgerät 2 wird anhand der Namensdienst-Informationen gestartet, die in der Cache-Speichereinheit des DNS-Clients 12 des ersten Kommunikationsgeräts 1 gespeichert sind.

Fällt nun das zweite Kommunikationsgerät 2 aus und wird gegen ein Ersatz-Kommunikationsgerät ausgetauscht, so übernimmt das Ersatz-Kommunikationsgerät dessen funktionale Rolle. Üblicherweise ändert sich bei einem Gerätetausch die dem Ersatz-Kommunikationsgerät für das zweite Kommunikationsgerät 2 zugeordnete Kommunikationsnetzadresse. Das Ersatz-Kommunikationsgerät übermittelt bei einem Geräteaustausch zwar automatisch eine entsprechende Registrierungsanforderung 22 an den DNS-Server 3. Allerdings führt diese Registrierungsanforderung noch nicht unmittelbar zu einer Aktualisierung der in der Cache-Speichereinheit des DNS-Clients 12 des ersten Kommunikationsgeräts 1 gespeicherten Namensdienst-Informationen. Um unnötig hohe Belastungen des DNS-Servers 3 zu vermeiden, werden nämlich nicht sämtliche in Cache-Speichereinheiten gespeicherte Namendienst-Informationen automatisch aktualisiert.

Um Konsistenzprobleme infolge nicht automatisch aktualisierter Cache-Inhalte zu verhindern, löst die verteilte Anwendung bzw. die auf dem ersten Kommunikationsgerät 1 ablaufende Teilanwendung 11 bei einem fehlgeschlagenen Verbindungsaufbauversuch zum zweiten Kommunikationsgerät 2 eine zumindest das zweite Kommunikationsgerät 2 umfassende Aktualisierung der in der Cache-Speichereinheit seines DNS-Clients 12 gespeicherten Namensdienst-Informationen aus. Im Fall erneuter fehlgeschlagener Verbindungsaufbauversuche kann die verteilte Anwendung die zumindest teilweise Aktualisierung der in der Cache-Speichereinheit gespeicherten Namensdienst-Informationen in mit jedem fehlgeschlagenen Verbindungsaufbauversuch zunehmenden Zeitabständen auslösen; z.B. anfangs häufig und danach seltener, um dauerhaft hohe Belastungen des DNS-Servers 3 zu vermeiden.

## Patentansprüche

1. Verfahren zur Ermittlung von Kommunikationsgeräteadressen innerhalb eines Kommunikationsnetzes eines industriellen Automatisierungssystems, bei dem
- zumindest eine Rechnereinheit (3) eines Kommunikationsnetz-Namensdienstes Namensdienst-Informationen (31) über Zuordnungen zwischen Kommunikationsgerätenamen und Kommunikationsnetzadressen entsprechend einem Namensauflösungsprotokoll bereitstellt,
- ausgewählten Kommunikationsgeräten (1, 2) des industriellen Automatisierungssystems jeweils eine Speichereinheit (12, 22) zugeordnet ist, in der jeweils zumindest ein Teil der Namensdienst-Informationen (31) temporär gespeichert wird, die durch den Kommunikationsnetz-Namensdienst bereitgestellt werden,
- die ausgewählten Kommunikationsgeräte (1, 2) für Namensauflösungen zuerst die in den ihnen zugeordneten Speichereinheiten (12, 22) temporär gespeicherten Namensdienst-Informationen abrufen,
- ein Verbindungsaufbau von einem ersten ausgewählten Kommunikationsgerät zu einem zweiten Kommunikationsgerät bei einer auf zumindest das erste und zweite Kommunikationsgerät verteilten Anwendung (11, 21) und/oder Funktion des industriellen Automatisierungssystems anhand der Namensdienst-Informationen (31) gestartet wird, die in der zum ersten Kommunikationsgerät (1, 2) zugeordneten Speichereinheit (12, 22) gespeichert sind,
- die Anwendung (11, 21) und/oder Funktion bei einem fehlgeschlagenen Verbindungsaufbauversuch eine zumindest teilweise Aktualisierung der in der zum ersten Kommunikationsgerät (1, 2) zugeordneten Speichereinheit (12, 22) gespeicherten Namensdienst-Informationen (31) auslöst,
**dadurch gekennzeichnet, dass**
- ein Ersatz-Kommunikationsgerät bei einem Austausch eines Kommunikationsgeräts durch das Ersatz-Kommunikationsgerät eine Registrierungsanforderung (22) an die Rechnereinheit (3) des Kommunikationsnetz-Namensdienstes übermittelt,
- die Anwendung (11, 21) und/oder Funktion bei erneuten fehlgeschlagenen Verbindungsaufbauversuchen die zumindest teilweise Aktualisierung der in der zum ersten Kommunikationsgerät (1, 2) zugeordneten Speichereinheit (12, 22) gespeicherten Namensdienst-Informationen in mit jedem fehlgeschlagenen Verbindungsaufbauversuch zunehmenden Zeitabständen auslöst.

2. Verfahren nach Anspruch 1,
bei dem Kommunikationsgeräten des industriellen Automatisierungssystems zugeordnete Namensdienst-Agenten bei einer für das jeweilige Kommunikationsgerät zu registrierenden Name-Adress-Zuordnung eine die Name-Adress-Zuordnung umfassende Registrierungsanforderung an die Rechnereinheit des Kommunikationsnetz-Namensdienstes übermitteln.

3. Verfahren nach Anspruch 2,
bei dem das Ersatz-Kommunikationsgerät ein Automatisierungsgerät umfasst oder in ein Automatisierungsgerät integriert ist.

4. Verfahren nach einem der Ansprüche 2 bis 3,
bei dem die Namensdienst-Agenten und die den ausgewählten Kommunikationsgeräten zugeordneten Speichereinheiten zur temporären Speicherung von Namensdienst-Informationen jeweils in einen DNS-Client eines ein Internetprotokoll-basierten Domain Name System integriert sind, und bei dem die Speichereinheiten einen Cache des jeweiligen DNS-Client bilden.

5. Verfahren nach einem der Ansprüche 1 bis 4,
bei dem die Namensdienst-Informationen in den Speichereinheiten, die den ausgewählten Kommunikationsgeräten zugeordnet sind, für eine durch den Kommunikationsnetz-Namensdienst vorgegebene Lebensdauer gespeichert und danach automatisch gelöscht werden.

6. Verfahren nach einem der Ansprüche 1 bis 5,
bei dem die Namensdienst-Informationen in den Speichereinheiten, die den ausgewählten Kommunikationsgeräten zugeordnet sind, Abfrageergebnisse von an den Kommunikationsnetz-Namensdienst gerichteten Namensauflösungsanfragen umfassen.

7. Verfahren nach Anspruch 6,
bei dem zumindest ein Teil der Namensauflösungsanfragen durch die ausgewählten Kommunikationsgeräte entsprechend einem regelmäßigen Abfrageschema für vorgebbare Kommunikationsgerätenamen an den Kommunikationsnetz-Namensdienst gerichtet wird.

8. Verfahren nach einem der Ansprüche 1 bis 7,
bei dem eine Aktualisierung der temporär in den zu den ausgewählten Kommunikationsgeräten zugeordneten Speichereinheiten gespeicherten Namensdienst-Informationen durch den Kommunikationsnetz-Namensdienst gesteuert wird.

9. Verfahren nach einem der Ansprüche 1 bis 8,
bei dem der Kommunikationsnetz-Namensdienst durch ein Internetprotokoll-basiertes Domain Name System bereitgestellt wird.

## Claims

1. Method for determining communication device addresses within a communication network of an industrial automation system, in which
- at least one computer unit (3) of a communication network name service provides name service information (31) relating to assignments between communication device names and communication network addresses according to a name resolution protocol,
- a storage unit (12, 22) is respectively assigned to selected communication devices (1, 2) of the industrial automation system and respectively temporarily stores at least some of the name service information (31) provided by the communication network name service,
- for name resolution processes, the selected communication devices (1, 2) first of all retrieve the name service information temporarily stored in the storage units (12, 22) assigned to them,
- a connection set-up from a first selected communication device to a second communication device is started, in the case of an application (11, 21) and/or function of the industrial automation system which is distributed among at least the first and second communication devices, on the basis of the name service information (31) stored in the storage unit (12, 22) assigned to the first communication device (1, 2),
- in the event of a failed attempt to set up a connection, the application (11, 21) and/or function trigger(s) at least partial updating of the name service information (31) stored in the storage unit (12, 22) assigned to the first communication device (1, 2),
**characterized in that**
- a replacement communication device, if a communication device is replaced with the replacement communication device, transmits a registration request (22) to the computer unit (3) of the communication network name service,
- in the event of renewed failed attempts to set up a connection, the application (11, 21) and/or function trigger(s) the at least partial updating of the name service information stored in the storage unit (12, 22) assigned to the first communication device (1, 2) at intervals of time which increase with each failed attempt to set up a connection.

2. Method according to Claim 1,
in which, in the case of a name/address assignment to be registered for the respective communication device, name service agents assigned to communication devices of the industrial automation system transmit a registration request comprising the name/address assignment to the computer unit of the communication network name service.

3. Method according to Claim 2,
in which the replacement communication device comprises an automation device or is integrated in an automation device.

4. Method according to one of Claims 2 to 3,
in which the name service agents and the storage units assigned to the selected communication devices for temporarily storing name service information are respectively integrated in a DNS client of an Internet-protocol-based domain name system, and in which the storage units form a cache of the respective DNS client.

5. Method according to one of Claims 1 to 4,
in which the name service information in the storage units assigned to the selected communication devices is stored for a lifetime predefined by the communication network name service and is then automatically deleted.

6. Method according to one of Claims 1 to 5,
in which the name service information in the storage units assigned to the selected communication devices comprises query results from name resolution requests directed to the communication network name service.

7. Method according to Claim 6,
in which at least some of the name resolution requests are directed to the communication network name service by the selected communication devices according to a regular query scheme for predefinable communication device names.

8. Method according to one of Claims 1 to 7,
in which updating of the name service information temporarily stored in the storage units assigned to the selected communication devices is controlled by the communication network name service.

9. Method according to one of Claims 1 to 8,
in which the communication network name service is provided by an Internet-protocol-based domain name system.

## Revendications

1. Procédé de détermination d'adresses d'appareil de communication dans un réseau de communication d'un système d'automatisation industriel, dans lequel
- au moins une unité (3) informatique d'un service de dénomination du réseau de communication met à disposition, conformément à un protocole de résolution de dénomination, des informations (31) de service de dénomination sur des associations entre des dénominations d'appareil de communication et des adresses dans le réseau de communication,
- aux appareils (1, 2) de communication sélectionnés du système d'automatisation industriel est associée, respectivement, une unité (12, 22) de mémoire, dans laquelle est mise en mémoire temporairement, respectivement, au moins une partie des informations (31) de service de dénomination mises à disposition par le service de dénomination du réseau de communication,
- les appareils (1, 2) de communication sélectionnés appellent, pour des résolutions de dénomination, d'abord les informations de service de dénomination mémorisées temporairement dans les unités (12, 22) de mémoire, qui leur sont associées,
- un établissement d'une communication d'un premier appareil de communication sélectionné à un deuxième appareil de communication est, pour une application (11, 21) et /ou une fonction, répartie sur au moins le premier et le deuxième appareils de communication, du système d'automatisation industriel, lancé à l'aide des informations (31) du service de dénomination, qui sont mémorisées dans l'unité (12, 22) de mémoire associée au premier appareil (1, 2) de communication,
- l'application (11, 21) et/ou la fonction déclenche, si l'essai d'établissement d'une communication est raté, une mise à jour, au moins partielle, des informations (31) du service de dénomination mémorisées dans l'unité (12, 22) de mémoire associée au premier appareil (1, 2) de communication,
**caractérisé en ce que**
- un appareil de communication de remplacement transmet, si un appareil de communication est remplacé par l'appareil de communication de remplacement, une demande (22) d'enregistrement à l'unité (3) informatique du service de dénomination du réseau de communication,
- l'application (11, 21) et/ou la fonction déclenche, pour des essais renouvelés d'établissement d'une communication ratés à des intervalles de temps croissant à chaque essai d'établissement d'une communication raté, la mise à jour, au moins en partie, des informations de service de dénomination mémorisées dans l'unité (12, 22) de mémoire associée au premier appareil (1, 2) de communication.

2. Procédé suivant la revendication 1,
dans lequel des agents du service de dénomination, associés aux appareils de communication du système d'automatisation industriel, transmettent à l'unité informatique du service de dénomination du réseau de communication, pour une association dénomination-adresse à enregistrer pour l'appareil de communication respectif, une demande d'enregistrement comprenant l'association dénomination-adresse.

3. Procédé suivant la revendication 2,
dans lequel l'appareil de communication de remplacement comprend un appareil d'automatisation ou est intégré à un appareil d'automatisation.

4. Procédé suivant l'une des revendications 2 à 3,
dans lequel les agents du service de dénomination et les unités de mémoire associées aux appareils de communication sélectionnés sont, pour la mise en mémoire temporaire d'informations du service de dénomination, intégrés, respectivement, dans un client DNS d'un système de dénomination de domaine reposant sur un protocole internet, les unités de mémoire formant un cache du client DNS respectif.

5. Procédé suivant l'une des revendications 1 à 4,
dans lequel les informations du service de dénomination sont mémorisées, pendant une durée de vie donnée à l'avance par le service de dénomination du réseau de communication, dans les unités de mémoire associées aux appareils de communication sélectionnés et sont ensuite effacées automatiquement.

6. Procédé suivant l'une des revendications 1 à 5,
dans lequel les informations du service de dénomination, dans les unités de mémoire, qui sont associées aux appareils de communication sélectionnés, comprennent des résultats de demandes de résolution de dénomination dirigées sur le service de dénomination du réseau de communication.

7. Procédé suivant la revendication 6,
dans lequel au moins une partie des demandes de résolution de dénomination par les appareils de communication sélectionnés est dirigée sur le service de dénomination du réseau de communication conformément à un schéma de demande suivant une règle pour des dénominations d'appareil de communication données à l'avance.

8. Procédé suivant l'une des revendications 1 à 7,
dans lequel une mise à jour des informations du service de dénomination mémorisées dans les unités de mémoire, associées aux appareils de communication sélectionnés, est commandée par le service de dénomination du réseau de communication.

9. Procédé suivant l'une des revendications 1 à 8,
dans lequel le service de dénomination du réseau de communication est donné par un système de nom de domaine reposant sur le protocole internet.
